# EUROPEAN PATENT SPECIFICATION

(11) **EP 4 062 692 B1**
(45) Date of publication and mention of the grant of the patent: **01.04.2026**
(21) Application number: 20797714.1
(22) Date of filing: 26.10.2020
(51) Int. Cl.: H04W 72/02, H04W 72/23, H04W 72/53, H04W 74/00, H04W 72/543

(54) **POLICY-BASED RESOURCE POOL ALLOCATION FOR LOW-LATENCY IOT AND OTHER APPLICATIONS**
RICHTLINIENBASIERTE ZUWEISUNG VON BETRIEBSMITTELBÜNDELN FÜR IOT MIT NIEDRIGER LATENZ UND ANDERE ANWENDUNGEN
ATTRIBUTION DE GROUPE DE RESSOURCES BASÉE SUR UNE POLITIQUE POUR L'IOT À FAIBLE LATENCE ET D'AUTRES APPLICATIONS

(30) Priority: 20.11.2019 US 201962937970 P
(43) Date of publication of application: 28.09.2022
(73) Proprietor: Nokia Technologies Oy, 02610 Espoo (FI)
(72) Inventor: MAEDER, Andreas, 97074 Würzburg (DE); RATASUK, Rapeepat, Inverness, IL 60010 (US); MANGALVEDHE, Nitin, Hoffmann Estates, IL 60010 (US); VILGELM, Mikhail, 81549 Munich (DE); GÜRSU, Halit Murat, 81371 Munich (DE)
(74) Representative: Script Intellectual Property LLP
(86) International application number: PCT/EP2020/080008
(87) International publication number: WO 2021/099064

(56) References cited:
- WO-A1-2018/184543
- US-A1- 2018 070 335
- US-A1- 2018 295 651
- US-A1- 2018 368 157
- US-A1- 2018 376 493
- US-A1- 2019 174 472
- ORANGE: "Uplink transmission on pre-allocated resources for LTE-MTC", vol. RAN WG1, no. Chengdu, China; 20181008 - 20181012, 28 September 2018 (2018-09-28), XP051518987, Retrieved from the Internet <URL:http://www.3gpp.org/ftp/tsg%5Fran/WG1%5FRL1/TSGR1%5F94b/Docs/R1%2D1811589%2Ezip> [retrieved on 20180928]

## Description

### TECHNICAL FIELD

This invention relates generally to wireless networks and, more specifically, relates to allocation of resources in the wireless networks.

### BACKGROUND

The "Internet of things" (IoT) is system of interconnected devices. This can have applications anywhere, such as in homes, where thermostats, lights, televisions, refrigerators, power meters, and the like can be interconnected. Industry also has a version, referred to as "Industrial Iot" (IIoT), where items such as forklifts or other machines, assemblies, sensors, and the like can be connected.

While this has benefits, e.g., for control and coordination, this also requires a lot of resources at times. For instance, for cellular wireless systems, these systems without IoT or IIoT might have only a few smartphones, tablets, and/or computers in an industrial area. Add IIoT to this, though, and the number of devices potentially requesting resources could become significantly higher. The IIoT devices are generally more sporadic in connecting to the network. A sensor, as an example, may send data periodically or when some limit has been reached. Additionally, the amount of data is typically small. To send temperature, for instance, the sensor may only need a few bytes of data.

The amount of overhead involved in the network to get an IIoT device connected to the network and assigned resources to be able to communicate with the network is, however, quite high. Further, because there is typically little to no coordination amongst the IIoT devices as to when the devices will be communicating, there could be multiple such requests occurring at peak times. This makes resource allocation for IIoT and similar devices a challenge.

US2018376493 A1 describes methods and apparatus for identification of colliding UE for grant-free transmission of data and scheduling requests based on resource sub-pool assignments for wireless networks. Described techniques include receiving, by a first user device from a base station, control information indicating an assignment of the first user device to a first scheduling request sub-pool of resources of one or more scheduling request sub-pools, and an assignment of the first user device to a first data sub-pool of resources of one or more data sub-pools, wherein the sub-pools assigned to the first user device allow a contention-based grant-free

mode transmission from the first user device of both a data and a scheduling request at the same time via different resources, wherein for at least a plurality of user devices no two user devices are assigned to both a same data sub-pool and a same scheduling request sub-pool.

WO2018184543 A1 relates to methods and systems for resource configuration of wireless communication systems. Methods and systems described support dynamic activation and deactivation of an allocated resource for a UE to make grant-free uplink transmission. In one described implementation, a user equipment (UE) receives a Radio Resource Control (RRC) signal. The RRC signal specifies grant-free (GF) configuration information. The GF configuration information comprises an activation field and at least one other GF resource configuration field. The activation field indicates whether the UE may perform GF uplink (UL) transmissions without waiting for a downlink control information (DCI) message. Then, the UE performs a GF UL transmission in accordance with the GF configuration information in the RRC signal.

US 2018/070335 A1 relates to a pre-5th-Generation (5G) or 5G communication system to be provided for supporting higher data rates in a Beyond 4th-Generation (4G) communication system such as Long Term Evolution (LTE). Embodiments therein disclose a system for multiple-access in a wireless communication system. The system includes a base station (BS) configured to implement an uplink transmission configuration including a resource pool having a plurality of resource blocks (RBs) allocated to support a contention-based multiple access or a grant-free multiple access. The BS is configured to signal the resource pool to a plurality of UEs. The UE from the plurality UEs is configured to receive the resource pool from the BS and send an uplink transmission to the BS by accessing at least one RB from the plurality of RBs allocated in the resource pool.

### SUMMARY

The invention is set out in the accompanying claims.

A first aspect of the invention comprises a method as set forth in claim 1.

A second aspect of the invention comprises a base station as set forth in claim 4.

Some preferred embodiments are defined by the dependent claims.

### BRIEF DESCRIPTION OF THE DRAWINGS

In the attached Drawing Figures:
FIG. 1 is a block diagram of one possible and non-limiting exemplary system in which the exemplary embodiments may be practiced;
FIG. 2 is a logic flow diagram for policy-based resource pool allocation for low-latency IIOT and other applications, and illustrates the operation of an exemplary method or methods, a result of execution of computer program instructions embodied on a computer readable memory, functions performed by logic implemented in hardware, and/or interconnected means for performing functions in accordance with exemplary embodiments; and
FIG. 3 is a signaling diagram and flowchart of policy-based resource pool allocation for low-latency IIOT and other applications, in accordance with an exemplary embodiment;
FIGS. 4A and 4B are results of simulations and are graphs of throughput (per resource unit) (FIG. 4A) and reliability (FIG. 4B) versus a number of UEs, in an exemplary embodiment.

### DETAILED DESCRIPTION OF THE DRAWINGS

The following abbreviations that may be found in the specification and/or the drawing figures are defined as follows:
- 3GPP: third generation partnership project
- 5G: fifth generation
- 5GC: 5G core network
- AMF: access and mobility management function
- BS: base station
- BWP: bandwidth part
- CRDSA: contention resolution diversity slotted ALOHA
- CU: central unit
- DCI: downlink control information
- DU: distributed unit
- eMBB: enhanced mobile broadband
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- f: frequency
- gNB (or gNodeB): base station for 5G/NR, i.e., a node providing NR user plane and control plane protocol terminations towards the UE, and connected via the NG interface to the 5GC
- ID: identifier
- IE: information element
- I/F: interface
- IIoT: industrial Internet of things
- IoT: Internet of things
- IP: Internet protocol
- IRSA: irregular repetition slotted ALOHA
- LTE: long term evolution
- MAC: medium access control
- MIoT: manufacturing Internet of things
- MME: mobility management entity
- ng or NG: next generation
- ng-eNB or NG-eNB: next generation eNB
- NOMA: non-orthogonal multiple access
- NR: new radio
- N/W or NW: network
- PDCP: packet data convergence protocol
- PHY: physical layer
- QoS: quality of service
- RAN: radio access network
- RB: resource block
- Rel: release
- RLC: radio link control
- RRH: remote radio head
- RRC: radio resource control
- RU: radio unit
- RRH: Rx receiver RRH remote radio head
- RRC: radio resource control
- RU: radio unit
- Rx: receiver
- SC: subcarrier
- SDAP: service data adaptation protocol
- SF: subframe
- SGW: serving gateway
- SIC: successive interference cancellation
- SMF: session management function
- TS: technical specification
- Tx: transmitter
- UE: user equipment (e.g., a wireless, typically mobile device)
- UPF: user plane function

The word "exemplary" is used herein to mean "serving as an example, instance, or illustration." Any embodiment described herein as "exemplary" is not necessarily to be construed as preferred or advantageous over other examples All of the arrangements described in this Detailed Description are examples provided to enable persons skilled in the art to make or use the invention and not to limit the scope of the invention which is defined by the claims.

The arrangements herein describe techniques for policy-based resource pool allocation for low-latency IIOT and other applications. Additional description of these techniques is presented after a system into which the exemplary embodiments may be used is described.

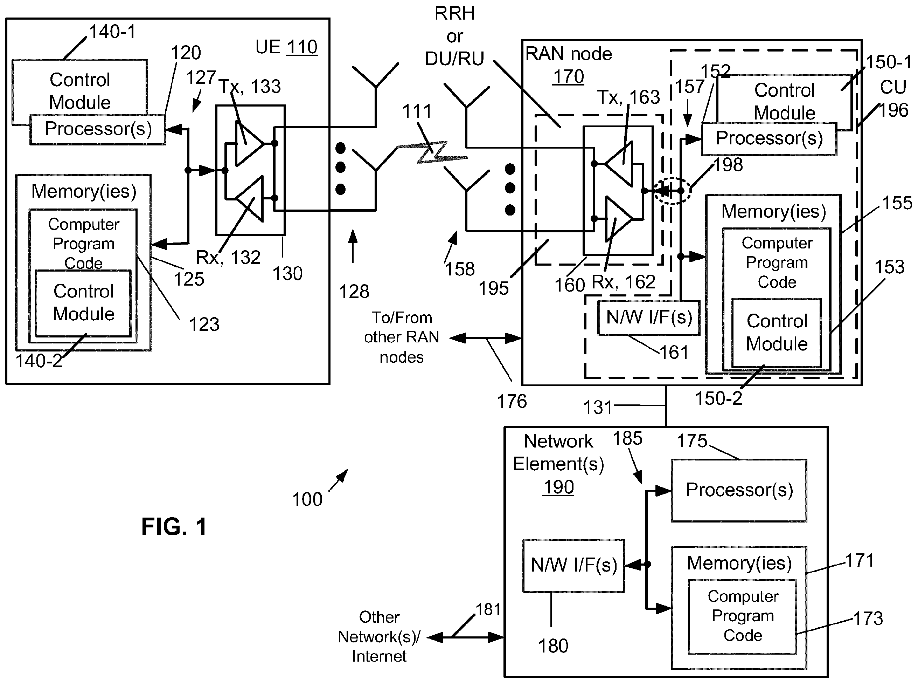

Turning to FIG. 1, this figure shows a block diagram of one possible and non-limiting exemplary system in which the exemplary embodiments may be practiced. A user equipment (UE) 110, radio access network (RAN) node 170, and network element(s) 190 are illustrated. In FIG. 1, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a control module 140, comprising one of or both parts 140-1 and/or 140-2, which may be implemented in a number of ways. The control module 140 may be implemented in hardware as control module 140-1, such as being implemented as part of the one or more processors 120. The control module 140-1 may be implemented also as an integrated circuit or through other hardware such as a programmable gate array. In another example, the control module 140 may be implemented as control module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 is a base station that provides access by wireless devices such as the UE 110 to the wireless network 100. The RAN node 170 may be, for instance, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface to a 5GC (e.g., the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by one gNB-DU. The gNB-DU terminates the F1 interface 198 connected with the gNB-CU. Note that the DU 195 is considered to include the transceiver 160, e.g., as part of an RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a control module 150, comprising one of or both parts 150-1 and/or 150-2, which may be implemented in a number of ways. The control module 150 may be implemented in hardware as control module 150-1, such as being implemented as part of the one or more processors 152. The control module 150-1 may be implemented also as an integrated circuit or through other hardware such as a programmable gate array. In another example, the control module 150 may be implemented as control module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the control module 150 may be distributed, such as being distributed between the DU 195 and the CU 196, or be implemented solely in the DU 195.

The one or more network interfaces 161 communicate over a network such as via the links 176 and 131. Two or more RAN nodes 170 communicate using, e.g., link 176. The link 176 may be wired or wireless or both and may implement, e.g., an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, e.g., fiber optic cable or other suitable network connection to connect the other elements (e.g., a central unit (CU), gNB-CU) of the RAN node 170 to the RRH/DU 195. Reference 198 also indicates those suitable network link(s).

In the description below, the term base station (BS) is used for the RAN 170. However, this is one example of RAN 170 and is not meant to be limiting.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various examples of the user equipment 110 can include, but are not limited to, cellular telephones such as smart phones, tablets, personal digital assistants (PDAs) having wireless communication capabilities, portable computers having wireless communication capabilities, vehicles with a modem device for wireless V2X (vehicle-to-everything) communication, image capture devices such as digital cameras having wireless communication capabilities, gaming devices having wireless communication capabilities, music storage and playback appliances having wireless communication capabilities, Internet appliances (including Internet of Things, IoT, devices) permitting wireless Internet access and possibly browsing, IoT devices with sensors and/or actuators for automation applications with wireless communication tablets with wireless communication capabilities, as well as portable units or terminals that incorporate combinations of such functions.

Having thus introduced one suitable but non-limiting technical context for the practice of the exemplary embodiments of this invention, arrangements will now be described with greater specificity.

Massive numbers of IoT devices cause major signaling overhead for LTE / NR systems due to their infrequent transmission patterns and small amounts of data. In particular, resource allocation is an issue. Resource allocation in NR includes the following two steps.
1) Resource assignment. For dynamic scheduling, a base station (BS) specifies in DCI the resources to be used by the UE as a bitmap or as an offset. The resources are allocated for the UE data according to a buffer status report or other parameters. For semi-static scheduling, the allocation is performed in the same manner, but the resources might be shared between UEs.
2) Data to resource mapping. In this step, the UE maps its data symbols to the resources.

A potential solution to reduce signaling for IIoT and similar applications is to pre-allocate a resource in a semi-persistent manner (referred to as semi-static scheduling in NR terminology), where the resource grant configuration is provided through a higher layer (e.g., RRC) signaling). In semi-static scheduling, UEs are pre-allocated resources in a semi-static manner. That is, resources (e.g. time-frequency allocation) are periodically reserved for transmission by the UE. This is in contrast to dynamic scheduling, where a scheduling grant is needed each time the gNB assigns resources for transmission by the UE. Semi-static scheduling also avoids the need for UEs to request resource from the gNB (e.g. by sending scheduling request signal to the gNB), which can add overhead and delay. However, semi-static scheduling in its current form brings one or more of the following disadvantages:
(1) Contention-free semi-static scheduling leads to resource waste if IoT devices have aperiodic or bursty traffic patterns. This is because resources have been pre-allocated but are not used by the UE.
(2) Contention-based semi-static scheduling may lead to collisions and performance degradation. To limit resource waste for UEs with aperiodic or bursty traffic patterns, multiple UEs may be assigned the same resources. This statistical multiplexing of UEs can reduce resource water. However, there may be collisions and loss of packets if multiple UEs transmit using the same resources.
(3) Semi-static allocation does not allow ensuring quality-of-service; and
(4) Semi-static allocation also lacks flexibility and cannot be applied together with advanced interference cancellation protocols schemes in its current form.

Multiple prior works, including 3GPP documents and research papers, suggest resource pooling for different reasons. See, e.g., the following for side link resource pools: R1-1906010, Huawei, HiSilicon, Discussion on sidelink resource allocation mode 1, 3GPP TSG RAN WG1 Meeting #97, Reno, USA, May 13-17, 2019; and R1-1811589, ORANGE, "Uplink transmission on pre-allocated resources for LTE-MTC", 3GPP TSG RAN WG1 Meeting #94bis, Chengdu, China, October 8st - 12th, 2018. See also the following research paper: P. Rost et al., "Network Slicing to Enable Scalability and Flexibility in 5G Mobile Networks," in IEEE Communications Magazine, vol. 55, no. 5, pp. 72-79, May 2017.

As compared with these prior works, an exemplary difference of certain examples herein is that the pooling is performed for QoS-aware multiplexing of users, with pool policy ensuring the QoS fulfillment depending on, e.g., the number of users, channel conditions, and physical layer techniques in use (e.g., interference cancellation).

As additional overview, an exemplary procedure is proposed for resource allocation where, instead of assigning specific resources to UEs 110, the BS 170 instead assigns a pool of resources, together with a resource selection policy. Resource assignment specifies a pool of resources to be available to UEs, while the policy specifies how a UE chooses resources from the pool (either in a stochastic or in a deterministic way), depending on, e.g., the QoS requirements of the UEs in the pool. The resource selection policy is subsequently applied by every UE prior to data symbols to resource mapping. The exemplary proposed procedure can be viewed as generalized semi-static scheduling, but the procedure can be implemented as a dynamic scheduling procedure.

In broad and non-limiting terms, the following overviews of example arrangements are provided.
1) Procedures and signaling are described for physical-layer-agnostic resource pool allocation, allowing statistical multiplexing of UEs, with resource selection policies allowing QoS differentiation. The resource selection policy is associated with a use case/network slice and mapped to the QoS requirements.
2) As a further tool for QoS provisioning, procedures and signaling are introduced for dynamic policy adjustment based on momentarily available information (e.g., transmission outcomes of other UEs, channel measurements, availability of resources). Modified DCI signaling may be re-used for policy adjustment.

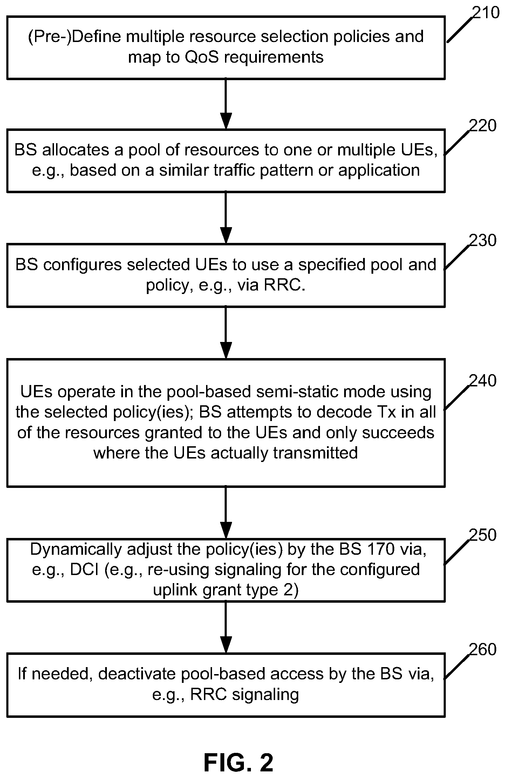

Now that an overview has been provided, additional details are described. For an example arrangement with semi-static scheduling, type 2 (in which the grant configuration is provided through RRC signaling, but activation and deactivation is done through layer-1 signaling), this is described in reference to FIG. 2, which is a logic flow diagram for policy-based resource pool allocation for low-latency IIOT and other applications. This figure also illustrates the operation of an exemplary method or methods, a result of execution of computer program instructions embodied on a computer readable memory, functions performed by logic implemented in hardware, and/or interconnected means for performing functions in accordance with exemplary embodiments. The blocks in FIG. 2 and the other operations described below are performed by the BS 170 (e.g., under control of the control module 150) or the UE 110 (e.g., under control of the control module 140).

Multiple resource selection policies are defined, or predefined e.g., in a specification, and mapped to QoS requirements or network slices. See block 210. As is known, network slicing allows multiple virtual networks to be created on top of a common shared physical infrastructure. The virtual networks may then be customized to meet the specific needs of applications, services, devices, customers or operators. In the case of 5G, for instance, a single physical network might be sliced into multiple virtual networks that can support different radio access networks (RANs), or different service types running across a single RAN. Each virtual network (network slice) comprises an independent set of logical network functions that support the requirements of a particular use case.

With respect to an exemplary arrangement herein, mapping is performed in a pre-defined manner, but since multiple policies can be pre-defined for a QoS requirement, the final decision left to the BS 170. Given a UE's application and / or QoS requirements, the BS 170 selects a policy and indicates the selected policy to the UE. Each resource selection policy comprises a rule for selection of a resource from a configured resource pool. If the policies are predefined, such as being in a standard, the BS 170 would use this information for allocation to UEs (as described below).

A mapping of resource selection policies to QoS requirements or network slices is defined, using the following exemplary method. It should be noted that reasons other than QoS could be applied to select a policy (e.g., resource availability, energy considerations, and the like).
1) A list of QoS requirements is compiled, which are related to different use cases or network slices.
2) Each QoS requirement is mapped to at least one policy. The mapping of requirements to policies in step (2) may also be predefined.
3) For a given QoS requirement that a UE must satisfy for an application, one of these policies can be assigned to the UE.

As example, QoS requirements for the following use cases can be considered:
a) eMBB background data, for small packet background data, e.g., caused by IP-based messenger services or similar;
b) IIoT / MIoT high priority for services like a critical sensor with high reliability and/or low latency; and
c) MIoT high volume small data, for massive small data transmissions.

Alternatively, the assignment of resource selection policy to QoS requirements or network slices can be left to implementation, such as by the BS or other elements of the network, based on, e.g., traffic type, QoS, data buffer size, and the like.

In block 220, the BS allocates a pool of resources to one or multiple UEs, e.g., based on the similar traffic pattern or application. The dimensions of the pool can be determined according to the number of UEs sharing the pool, their traffic patterns, channel quality, QoS requirements, and the like. Dimensions can include a number of RBs and transmission duration (e.g., mini-slot, slot, or even multiple sub-frames). Dimensions should be selected carefully according to QoS requirements of all UEs, however, QoS differentiation between UEs should be rather handled by the policy and not by the resource dimensioning. All selected UEs get the same pool, but the policy might indicate different behavior or may be QoS dependent. Alternatively, the resource pool can be also implemented as a bandwidth part (BWP). In an exemplary embodiment, the allocated pool of resource is assigned an ID, *ResourceID.*

The BS 170, in block 230, configures selected UEs to use a specified pool and policy, e.g., via RRC. The BS indicates resource time periodicity and frequency parameters (using, e.g., an offset or bitmask), and transmission parameters (e.g., power, modulation, and coding). Additionally, the BS may indicate a default resource selection policy, based on the QoS requirement, for the allocated pool of resources with ID *ResourceID.* Additional parameters for the resource selection policy may also be indicated.

The parameters for the resource selection policy can be determined based on the same parameters as the pool dimensions, and according to the physical layer techniques used (e.g., whether interference cancellation is used or not). Example policies, assuming one time-frequency resource unit (e.g., a RB in one subframe) is sufficient to send the buffered data, include using one of the following non-limiting examples:
a) uniformly random choice of one out of N RBs (where N is the number of RBs in the pool); or
b) weighted random choice according to channel qualities (e.g., according to a Boltzmann distribution) (e.g., a higher weight, which means more resources, could be assigned to UEs with lower channel quality on the link to BS, to compensate for the bad channel quality); or
c) random choice of K out of N RBs (e.g., K≥1, replicas of the data are sent for increased reliability, or for increased throughput if successive interference cancellation is applied).

A UE 110 may be assigned multiple policies (for different resource IDs) based on, e.g., the associated traffic type for traffic the UE will transmit, QoS (e.g., related to a type of application for which the UE is transmitting data), data buffer size for a data buffer on the UE, and the like. All of these parameters are UE related. QoS is associated with an application, and there might be multiple applications. Buffer size can be also per-traffic type or per UE. Signaling procedures for configuring semi-static resource allocation can be re-used for indication, i.e. extending the ConfiguredGrantConfig IE (see 3GPP TS 38.331) by also specifying resource usage policy.

In block 240, the UEs 110 operate in a pool-based semi-static mode using the selected policy(ies). While the UEs 110 operate as such and perform transmissions, the base station 170 does not know which resources were selected by a given UE when the given UE is making a random choice. In such cases, the BS 170 attempts to decode a transmission from the given UE in all of the resources that are granted to this given UE and the BS 170 succeeds only where the given UE actually transmitted. Exemplary operations are additionally described in more detail below.

In block 250, the policy(ies) can be dynamically adjusted by the BS 170 via, e.g., DCI (e.g., re-using signaling for the configured uplink grant type 2). Examples of this adjusting may include the following.
a) A critical message is arriving / is anticipated to arrive in the buffer of one of the UEs using the pool. Hence, the BS 170 indicates that some other UEs cannot use the upcoming pool, and indicates that the UE with the critical message can send more replicas (e.g., copies) of the message to increase redundancy / reliability.
b) Assume that M UEs are configured to use the pool with one replica message. The BS 170 successfully received and decoded data from M-X UEs in the ith frame, thus fulfilling their QoS requirements. Hence, during the (i+1)th frame, the BS dynamically deactivates access for these UEs, and only allows to access for the remaining X UEs. To make more efficient and reliable use of these resources, the BS 170 also indicates an increase of number of replicas for the remaining UEs.
c) The BS needs to free resources for other transmissions (e.g., background data), therefore the BS temporary disallows usage of the upcoming resource pool access.
d) Dynamic adjustment can be used to enable tree algorithm logic, where such logic is used to adjust the resource selection probability if a collision happens.

Additionally, the BS 170 may observe the outcome of some of the resources for at least one or more user equipment, and according to the observation dynamically adjust the resource selection policy to maximize an objective function (e.g., throughput, reliability, and the like) for at least one or more remaining user equipment.

In block 260, if needed, pool-based access is deactivated by the BS 170 via, e.g., RRC signaling.

It is noted that it is not required to use the semi-static allocation. As an alternative, it is possible to realize the same procedure with dynamic scheduling as well. Dynamic scheduling could prove an advantage of more accurate synchronization and channel quality information, thus better interference cancellation is possible.

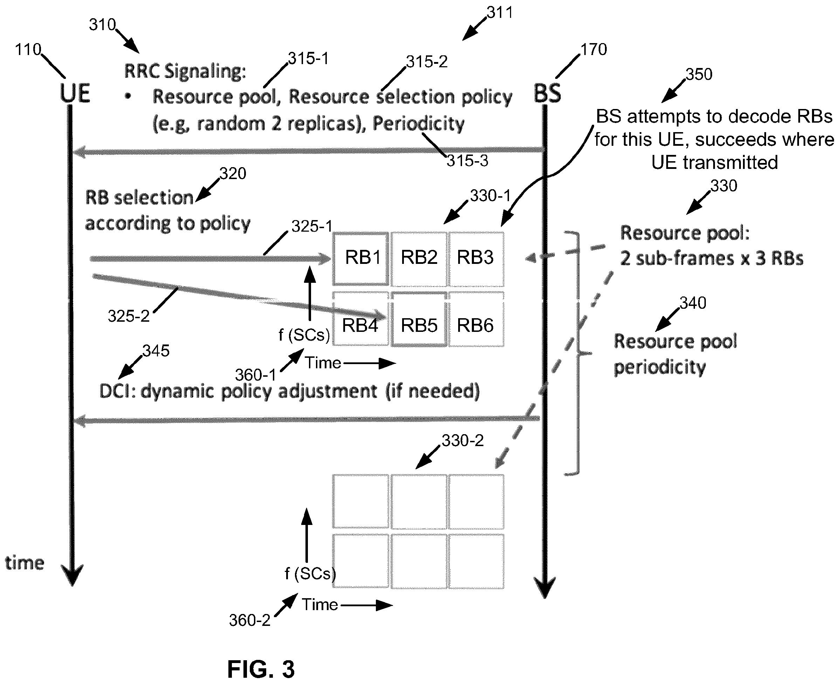

Turning to FIG. 3, this figure is a signaling diagram and flowchart of policy-based resource pool allocation for low-latency IIOT and other applications, in accordance with an exemplary embodiment. In this example, the BS 170 performs RRC signaling (see reference 310) to the UE 110 of resource pool allocation information 311 comprising the following indications: a resource pool indication 315-1; a resource selection policy (e.g., random 2 replicas) indication 315-2; and a periodicity indication 315-3. This signaling corresponds also to block 230 of FIG. 2.

The UE, using information in the resource pool allocation information 311, then performs RB selection according to the policy. See reference 320. The resource pool is three RBs in time by two RBs in frequency (subcarriers, SCs). See reference 330. There is a time-frequency resource space 360 shown, in both 360-1 and 360-2, each of which corresponds to a respective resource pool 330-1, 330-2. For the time-frequency resource space 360, there are three RBs shown in time and resource blocks (RBs) shown in frequency (SCs). A typical radio frame would have 10 subframes, each of which is 1ms in duration and includes typically two RBs in time. Each subframe and RB generally has twelve subcarriers, and a radio frame may have 72 total carriers, as an example. A resource pool 330 is therefore some part of that radio frame, as the pool 330 is six RBs, RBI through RB6. In the example of FIG. 3, the RB selection according to policy in reference 320 selects RBs RB 1 and RB5 from the resource pool 330-1. The UE 110 transmits 325-1 and 325-2 the RBs RB 1 and RB5, and the BS 170 receives these. As indicated by reference 350, for the examples where the UE selects RBs randomly, the BS 170 attempts to decode RBs for this UE, and succeeds where UE transmitted (i.e., in those RBs, RB1 and RB 5, used by the UE).

Resource pool 330-2 is showing the next instance in time when the pool is granted and is not showing selection. Alternatively, the resources in resource pool 330-2 could be blank, as described in (c) above. Resources might stay unused due to stochastic nature of the policy also.

Reference 340 illustrates the resource pool periodicity (e.g., in subframes or frames) as indicated by periodicity indication 315-3.

Reference 345 illustrates signaling of a dynamic policy adjustment (see also block 250 of FIG. 2). This is performed if needed.

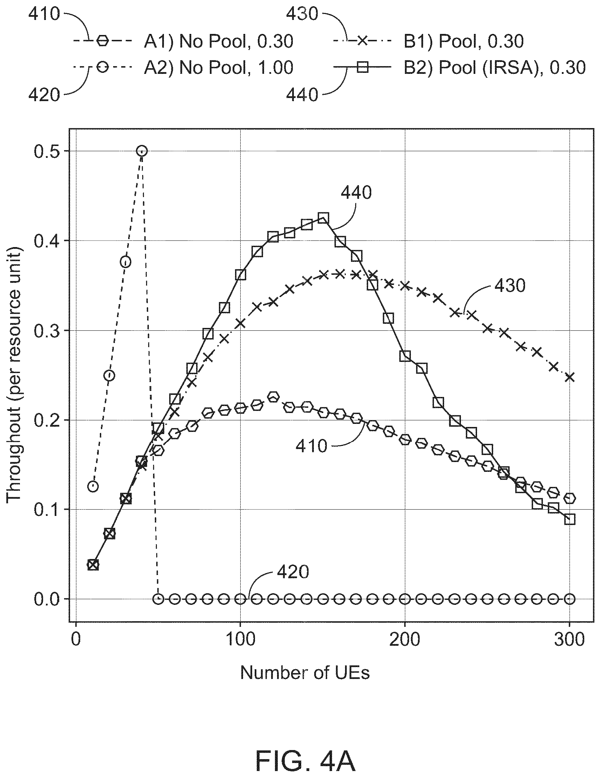

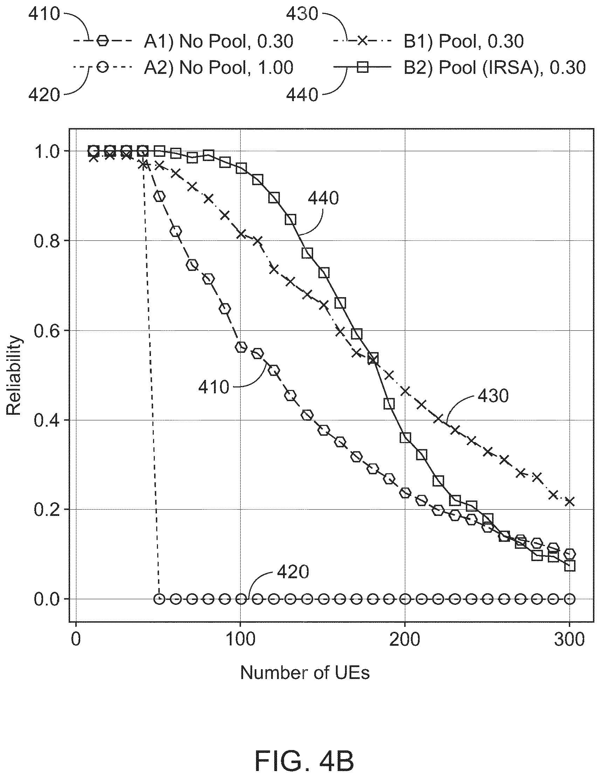

The inventors have performed simulations based on an exemplary arrangement. FIGS. 4A and 4B are results of simulations and are graphs of throughput (per resource unit) (FIG. 4A) and reliability (FIG. 4B) versus a number of UEs, in anexample. In these examples, a comparison is made between UEs with no assigned pool of resources and UEs with an assigned pool of resources, as described. Additionally, different application activation probability per UE of 0.3 or 1.0 per period is used. The curves are graphed as follows: A1) the curves 410 illustrate no pool and application activation probability per UE of 0.3; A2) the curves 420 illustrate no pool and application activation probability per UE of 1.00; B1) the curves 430 illustrate with a pool and application activation probability per UE of 0.3; and B2) the curves 440 illustrate with a pool but using IRSA (irregular repetition slotted ALOHA) and application activation probability per UE of 0.3. This example of IRSA is from Liva, Gianluigi, "Graph-based analysis and optimization of contention resolution diversity slotted ALOHA", IEEE Transactions on Communications 59.2 (2010): 477-487.

The assumptions for the simulations were as follows:
1) One resource unit is defined as an amount of time/frequency resources needed to send one data packet.
2) All UEs generate the same amount of data.
3) Decoding is error-free unless there is a collision.
4) Reliability is measured as a ratio of packets arriving successfully within the allowed re-transmissions.
5) Throughput is measured as an amount of successfully decoded packets, normalized by the total amount of allocated resource units.

The parameters were as follows:
1) Number of resource units available: 40.
2) Periodicity: 1 frame.
3) Number of UEs: varying between 30 and 300.
4) Application activation probability per UE: 0.3 or 1.0 per period (see legend in FIGS. 4A and 4B)
5) Application period: 2 frames.
6) Number of allowed re-transmissions: 2.

Compare (A1) non-pool allocation (every UE gets exactly amount of resources the UE needs, if there are more UEs than resources, resources are shared), and(A2) pool-based allocation (all resources are allocated as a pool to all UEs - fully shared) with two policies: (B1) uniformly random resource choice, (B2) transmissions with replicas according to degree distribution 0.5x + 0.25x² + 0.25x³ with inter-slot interference cancellation (IRSA). This comparison shows that the two curves 430 and 440 with use of a pool of resources as per the assumptions and parameters presented above yield better results than do the two curves 410 and 420 without the pooling of resources provided herein.

Technical effects and advantages of one or more of the arrangements disclosed herein include one or more of the following:
1) Due to resource pooling and introduction of the selection policy, more efficient resource usage and higher multiplexing gains can be achieved;
2) Flexible resource selection policy enables usage of NOMA or other successive interference cancellation techniques (such as Contention Resolution Diversity Slotted ALOHA or Irregular Repetition Slotted ALOHA;
3) Pooled resources imply a degree of overprovisioning, which can be used to increase reliability, e.g., via K-repetitions or frequency hopping;
4) Dynamic low-overhead policy adjustment allows to further improve resource usage or contention resolution; or
5) BS can enforce more control on UEs with less overhead, e.g., especially important for reliability and efficiency with the increasing number of devices.

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1. A computer-readable medium may comprise a computer-readable storage medium (e.g., memories 125, 155, 171 or other device) that may be any media or means that can contain, store, and/or transport the instructions for use by or in connection with an instruction execution system, apparatus, or device, such as a computer. A computer-readable storage medium does not comprise propagating signals.

If desired, the different functions discussed herein may be performed in a different order and/or concurrently with each other. Furthermore, if desired, one or more of the above-described functions may be optional or may be combined.

Although various aspects are set out above, other aspects comprise other combinations of features from the described embodiments, and not solely the combinations described above.

It is also noted herein that while the above describes example arrangements, variations and modifications may be made without departing from the scope of the claims.

## Claims

1. A method, comprising:
determining, by a base station (170), a resource selection policy for one or more user equipment (110) from defined multiple resource selection policies based on a quality of service requirement of said one or more user equipment, wherein multiple resource selection policies are defined (210) prior to the determination and are respectively mapped to quality of service requirements;
configuring (230), by the base station, the one or more user equipment to use a pool of resources and the determined resource selection policy for the one or more user equipment to use to select one or more resources from the pool of resources; and
receiving, by the base station, information from the one or more user equipment in the selected one or more resources.

2. The method of claim 1, wherein the resource selection policy comprises one of the following:
uniformly random choice of one out of N resource blocks, where N is a number of resource blocks in the pool of resources; or
weighted random choice according to channel qualities; or
random choice of K, K ≥ 1, out of the N resource blocks.

3. The method of claim 1, wherein the mapping the resource selection policies further comprises mapping (210) of resource selection policies to the quality of service requirements or to network slices, and wherein a mapping of resource selection policies to quality of service requirements or to network slices is defined as follows:
compiling a list of quality of service requirements, which are related to different use cases or network slices;
mapping each quality of service requirement to at least one policy; and
assigning, for a given quality of service requirement that a user equipment must satisfy for an application, one of these policies to the user equipment.

4. A base station comprising:
means for determining a resource selection policy for one or more user equipment (110) from defined multiple resource selection policies based on a quality of service requirement of said one or more user equipment, wherein multiple resource selection policies are defined (210) prior to the determination and are respectively mapped to quality of service requirements;
means for configuring (230) the one or more user equipment to use a pool of resources and the determined resource selection policy for the one or more user equipment to use to select one or more resources from the pool of resources; and
means for receiving information from the one or more user equipment in the selected one or more resources.

5. The base station of claim 4, wherein the resource selection policy comprises one of the following:
uniformly random choice of one out of N resource blocks, where N is a number of resource blocks in the pool of resources; or
weighted random choice according to channel qualities; or
random choice of K, K ≥ 1, out of the N resource blocks.

6. The base station of claim 4, wherein the means for mapping the resource selection policies further comprises means for mapping (210) of resource selection policies to the quality of service requirements or to network slices, and wherein a mapping of resource selection policies to quality of service requirements or to network slices is defined as follows:
compiling a list of quality of service requirements, which are related to different use cases or network slices;
mapping each quality of service requirement to at least one policy; and
assigning, for a given quality of service requirement that a user equipment must satisfy for an application, one of these policies to the user equipment.

## Patentansprüche

1. Verfahren, das Folgendes umfasst:
Bestimmen einer Ressourcenauswahlrichtlinie für eine oder mehrere Teilnehmereinrichtungen (110) aus definierten mehreren Ressourcenauswahlrichtlinien durch eine Basisstation (170) auf Basis einer Dienstqualitätsanforderung der einen oder der mehreren Teilnehmereinrichtungen, wobei mehrere Ressourcenauswahlrichtlinien vor dem Bestimmen definiert (210) und jeweils Dienstqualitätsanforderungen zugeordnet werden;
Auslegen (230) der einen oder der mehreren Teilnehmereinrichtungen zum Verwenden eines Pools von Ressourcen und der bestimmten Ressourcenauswahlrichtlinie für die eine oder die mehreren Teilnehmereinrichtungen zum Verwenden, um eine oder mehrere Ressourcen aus dem Pool von Ressourcen auszuwählen, durch die Basisstation; und
Empfangen von Informationen von der einen oder den mehreren Teilnehmereinrichtungen in der einen oder den mehreren ausgewählten Ressourcen durch die Basisstation.

2. Verfahren nach Anspruch 1, wobei die Ressourcenauswahlrichtlinie eines von Folgenden umfasst:
einheitliche zufällige Auswahl von einem von N Ressourcenblöcken, wo N eine Anzahl von Ressourcenblöcken im Pool von Ressourcen ist; oder
gewichtete zufällige Auswahl gemäß Kanalqualitäten; oder
zufällige Auswahl von K, K ≥ 1, aus den N Ressourcenblöcken.

3. Verfahren nach Anspruch 1, wobei das Zuordnen der Ressourcenauswahlrichtlinien ferner das Zuordnen (210) von Ressourcenauswahlrichtlinien zu den Dienstqualitäsanforderungen oder zu Netzwerkslices umfasst, und wobei das Zuordnen von Ressourcenauswahlrichtlinien zu Dienstqualitäsanforderungen oder zu Netzwerkslices wie folgt definiert ist:
Kompilieren einer Liste von Dienstqualitäsanforderungen, die sich auf verschiedene Anwendungsfälle oder Netzwerkslices beziehen;
Zuordnen jeder Dienstqualitätsanforderung zu mindestens einer Richtlinie; und
Zuweisen von einer dieser Richtlinien für eine gegebene Dienstqualitätsanforderung, die eine Teilnehmereinrichtung für eine Anwendung erfüllen muss, zur Teilnehmereinrichtung.

4. Basisstation, die Folgendes umfasst:
Mittel zum Bestimmen einer Ressourcenauswahlrichtlinie für eine oder mehrere Teilnehmereinrichtungen (110) aus definierten mehreren Ressourcenauswahlrichtlinien auf Basis einer Dienstqualitätsanforderung der einen oder der mehreren Teilnehmereinrichtungen, wobei mehrere Ressourcenauswahlrichtlinien vor dem Bestimmen definiert (210) und jeweils Dienstqualitätsanforderungen zugeordnet werden;
Mittel zum Auslegen (230) der einen oder der mehreren Teilnehmereinrichtungen zum Verwenden eines Pools von Ressourcen und der bestimmten Ressourcenauswahlrichtlinie für die eine oder die mehreren Teilnehmereinrichtungen zum Verwenden, um eine oder mehrere Ressourcen aus dem Pool von Ressourcen auszuwählen; und
Mittel zum Empfangen von Informationen von der einen oder den mehreren Teilnehmereinrichtungen in der einen oder den mehreren ausgewählten Ressourcen.

5. Basisstation nach Anspruch 4, wobei die Ressourcenauswahlrichtlinie eines von Folgenden umfasst:
einheitliche zufällige Auswahl von einem von N Ressourcenblöcken, wo N eine Anzahl von Ressourcenblöcken im Pool von Ressourcen ist; oder
gewichtete zufällige Auswahl gemäß Kanalqualitäten; oder
zufällige Auswahl von K, K ≥ 1, aus den N Ressourcenblöcken.

6. Basisstation nach Anspruch 4, wobei die Mittel zum Zuordnen der Ressourcenauswahlrichtlinien ferner Mittel zum Zuordnen (210) von Ressourcenauswahlrichtlinien zu den Dienstqualitäsanforderungen oder zu Netzwerkslices umfassen, und wobei ein Zuordnen von Ressourcenauswahlrichtlinien zu Dienstqualitäsanforderungen oder zu Netzwerkslices wie folgt definiert ist:
Kompilieren einer Liste von Dienstqualitäsanforderungen, die sich auf verschiedene Anwendungsfälle oder Netzwerkslices beziehen;
Zuordnen jeder Dienstqualitätsanforderung zu mindestens einer Richtlinie; und
Zuweisen von einer dieser Richtlinien für eine gegebene Dienstqualitätsanforderung, die eine Teilnehmereinrichtung für eine Anwendung erfüllen muss, zur Teilnehmereinrichtung.

## Revendications

1. Procédé, comprenant les étapes suivantes :
déterminer par une station de base (170), une politique de sélection de ressources pour un ou plusieurs équipements utilisateurs (110) à partir de multiples politiques de sélection de ressources sur la base d'une exigence de qualité de service desdits un ou plusieurs équipements utilisateurs, dans lequel les multiples politiques de sélection de ressources sont définies (210) avant la détermination et sont respectivement mappées à des exigences de qualité de service ;
configurer (230), par la station de base, les un ou plusieurs équipements utilisateurs pour utiliser une réserve de ressources et la politique de sélection de ressources déterminée pour les un ou plusieurs équipements utilisateurs pour sélectionner une ou plusieurs ressources à partir de la réserve de ressources ; et
recevoir des un ou plusieurs équipements utilisateurs, par la station de base, des informations dans les une ou plusieurs ressources sélectionnées.

2. Procédé selon la revendication 1, dans lequel la politique de sélection de ressources comprend l'un des éléments suivants :
un choix aléatoire uniforme d'un bloc parmi N blocs de ressources, où N est un nombre de blocs de ressources dans la réserve de ressources ; ou
un choix aléatoire pondéré selon des qualités de canal ; ou
un choix aléatoire de K parmi les N blocs de ressources, K ≥ 1.

3. Procédé selon la revendication 1, dans lequel le mappage des politiques de sélection de ressources comprend en outre le mappage (210) des politiques de sélection de ressources aux exigences de qualité de service ou à des tranches de réseau, et dans lequel un mappage des politiques de sélection de ressources à des exigences de qualité de service ou à des tranches de réseau est défini comme suit :
compiler une liste des exigences de qualité de service qui sont liées à différents cas d'utilisation ou tranches de réseau ;
mapper chaque exigence de qualité de service à au moins une politique ; et
attribuer une de ces politiques à l'équipement utilisateur pour une exigence de qualité de service donnée qu'un équipement utilisateur doit satisfaire pour une application.

4. Station de base comprenant :
des moyens pour déterminer une politique de sélection de ressources pour un ou plusieurs équipements utilisateurs (110) à partir de multiples politiques de sélection de ressources sur la base d'une exigence de qualité de service desdits un ou plusieurs équipements utilisateurs, dans laquelle les multiples politiques de sélection de ressources sont définies (210) avant la détermination et sont respectivement mappées à des exigences de qualité de service ;
des moyens pour configurer (230) les un ou plusieurs équipements utilisateurs pour utiliser une réserve de ressources et la politique de sélection de ressources déterminée pour les un ou plusieurs équipements utilisateurs pour sélectionner une ou plusieurs ressources à partir de la réserve de ressources ; et
des moyens pour recevoir des un ou plusieurs équipements utilisateurs des informations dans les une ou plusieurs ressources sélectionnées.

5. Station de base selon la revendication 4, dans laquelle la politique de sélection de ressources comprend l'un des éléments suivants :
un choix aléatoire uniforme d'un bloc parmi N blocs de ressources, où N est un nombre de blocs de ressources dans la réserve de ressources ; ou
un choix aléatoire pondéré selon des qualités de canal ; ou
un choix aléatoire de K parmi les N blocs de ressources, K ≥ 1.

6. Station de base selon la revendication 4, dans laquelle les moyens pour mapper les politiques de sélection de ressources comprennent en outre des moyens pour mapper (210) les politiques de sélection de ressources aux exigences de qualité de service ou à des tranches de réseau, et dans laquelle un mappage des politiques de sélection de ressources à des exigences de qualité de service ou à des tranches de réseau est défini comme suit :
compiler une liste des exigences de qualité de service qui sont liées à différents cas d'utilisation ou tranches de réseau ;
mapper chaque exigence de qualité de service à au moins une politique ; et
attribuer une de ces politiques à l'équipement utilisateur pour une exigence de qualité de service donnée qu'un équipement utilisateur doit satisfaire pour une application.
